# EUROPEAN PATENT APPLICATION

(11) **EP 1 675 053 A1**
(43) Date of publication of application: **28.06.2006**
(21) Application number: 05110830.6
(22) Date of filing: 16.11.2005
(51) Int. Cl.: G06Q 10/00

(54) **System for managing the service levels provided by service providers**

(30) Priority: 22.12.2004 EP 04300935
(71) Applicant: International Business Machines Corporation, Armonk, N.Y. 10504 (US)
(72) Inventor: BERTHAUD, Jean Marc, 06270, VILLENEUVE-LOUBET (FR); CHANG, Rong N, Pleasantville, NY 10570 (US); BUCO, Melissa, Amawalk, NY New York 10501 (US); DALSKY, Joel, Hoffman Estates , IL Illinois 60192 (US); FANG, Shih-Chung, Schaumburg IL Illinois 60173 (US); LUAN, Laura Zaihua, Putnam Valley, NY 10579, (US); TSIAO, Lee, 60195, Hoffman Estates (US); WARD, Christopher, NJ 07028, Glen Ridge (US)
(74) Representative: Etorre, Yves Nicolas

(57) **Abstract**

System for managing the service levels provided by Service Providers to a customer comprising a processing engine (10) for transforming (14) measurement data into operational data using service time profiles and Services Level business logics, and evaluating (16) the operational data in order to produce Service Level results and qualified operational data. The processing engine comprises means (12) for adjudicating said measurement data before transforming them into operational data, this adjudication being made by using a set of adjudication elements (30) describing the modifications to bring, and means (18) for qualifying the operational data after they have been evaluated, this qualification being made by comparing operational data with qualification values determined with regard to Service Level targets for each business period.

## Description

### Technical field

The invention relates to service management and service presentation systems wherein measurement data regarding services delivered by Service Providers to customers are gathered and handled to compute and communicate service indicators defined in service level agreements and, in particular, relates to a method for managing the service levels provided by Service Providers.

### Background

A Service Provider (SP) provides, hosts or manages resources for its customers. A resource can be a server, a particular application on a server, a networking device, people in a help desk to answer users, people to fix problems, people to manage and change systems configuration and location, or a complex solution made of multiple elements to accomplish or support a customer business process. The Service Provider and the customer can be different firms, or different departments in a large global enterprise where departments are organized as support services for other departments, e.g. Marketing, Research, Sales, Production.

Normally, a Service Level Agreement (SLA) is signed between a provider and a customer to define the role of each party and to remove any ambiguity from the business relationship. Such a SLA:
- Identifies the parties involved in the agreement.
- Describes the service to be provided, and identifies in a measurable and quantifiable manner indicators of the quality of the service on which obligations will be set, with a possible series of exceptions and stipulations in the way to calculate these indicators.
- Defines the obligations, called Service Levels (SL), to be met on the identified indicators, so that the expected quality of the delivered services is set in an un-ambiguous manner.
- Defines the agreement period for which these obligations are set forward.
- Pre-defines penalties to be paid/executed by the SP if the commitment(s) is (are) not met. If a commitment is exceeded, a reward can also be predefined, to be paid by the customer.
- Also defines reporting policies, corrective actions, dispute resolution procedures, termination criteria, intellectual property.

A SLA is encountered when considering utilities to be trusted "always on" services like water, electricity, gas, telephone or e-Business On Demand. In fact, a SLA exists when a specific service offer including commitments is engaged with a customer.

By itself, a SLA does not bring any change in the level of service delivered. The Service Provider and/or the customer need to implement a Service Level Management (SLM) program that will actually result in higher levels of services. Indeed, SLAs only indicate whether or not a service is reaching agreed levels. When not met, the issue is to determine what caused the violation, may be how to improve the service, or change the SLA or the provider. The Service Level Management begins with the development of new service levels for a new contract and continues throughout the life of the contract to ensure Service Level commitments are met and maintained.

The Service Level Management is commonly identified as the activities of:
- negotiating, identifying and agreeing the measurable services that support the Business Process of a customer, and defining the SLA articulation in an offering for service with Service Level Objectives (SLO) also known as Service Level Targets (SLT),
- monitoring resources used to deliver a service and capturing data on how well these resources perform from monitors or from logs,
- calculating intermediate and high level Service Levels results or scores using the predefined service parameters formulae (called metrics) and taking into account all kinds of exceptions that can occur, assessing attainment versus commitments and possible penalties or rewards,
- assessing impact of operational outages or degradations in terms of SLAs (services) and financial impacts, alerting in real-time of possible or effected outages, diagnosing problems for resolution, enforcing corrective actions wherever possible to regulate the delivery system and therefore try to proactively guarantee the achievement of obligations,
- reporting to the provider and the customer on real numbers versus contractual numbers, and sealing final numbers to be used for rebates or rewards,
- rebating to customers when commitments are not achieved, or rewarding the provider when commitments are exceeded, and
- refining, improving and reviewing SLA definitions, service levels and services that support the customer's Business Process.

Today, there are SLA Management Systems which are automated for managing SLAs such as IBM Tivoli Service Level Advisor, Computer Associates SLM, Digital Fuel or InfoVista. They are built to accomplish, at least, a minimum set of tasks such as capturing data from monitoring systems, and they participate or supply information to next steps such as alerting, enforcing or reporting.

However, these systems provide no complete answer to the problem. Indeed, very often a piece of the solution used to support the customer business process which is managed by the Service Provider is coming from the customer, or is under the customer's responsibility (shared or not with the Service Provider). The means used by these systems do not allow to automatically take such situations into account where an SLA is violated due to Customer's responsibility. In such cases, the result must be revised to reflect the true responsibility of the SP only, after calculation by these systems.

In addition, when an SLA is violated, or when the SP is attempting to improve its delivered service, a lot of investigation can be done on monitoring data, and it has to take into account the problem expressed above. These SLA Management Systems do not provide any help on these tasks which can then be time consuming and not very efficient, or then require the use of other complex and costly to implement external tools for correlation between data and results.

### Summary of the invention

Accordingly, the object of the invention is to provide a System and to achieve a method for managing the Service Levels provided by Service Providers to a customer by introducing a step of modification of input data (adjudication) taking into consideration external information elements related to input data (adjudication elements) such as the SLA contract clauses, or such as input from the service manager or other enterprise management systems, in order to produce new modified input data for Service Level calculations and then to qualify the resulting detailed calculation data (operational data) with regards to their participation in achieving or not Service Level Targets.

The invention therefore relates to a system for managing a service level provided by a Service Provider to a customer comprising a processing engine for transforming measurement data into operational data using service time profiles and Services Level business logics, and evaluating the operational data in order to produce Service Level results and qualified operational data. The processing engine comprises means adjudicating the measurement data before transforming them into operational data, this adjudication being made by using a set of adjudication elements describing the modifications to bring, and means for qualifying the operational data after they have been evaluated, this qualification being made by comparing operational data with qualification values determined with regard to Service Level targets for each business period.

### Brief description of the drawings

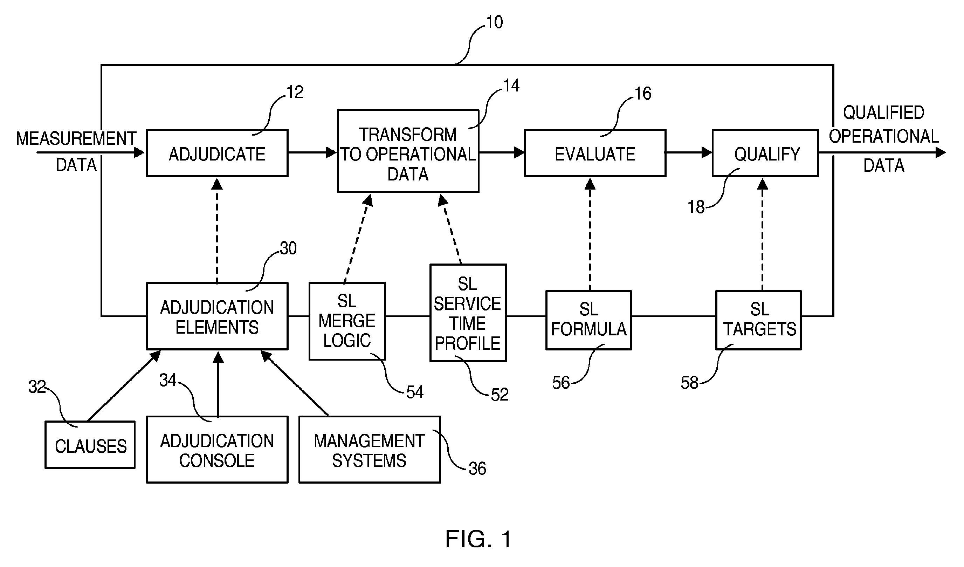

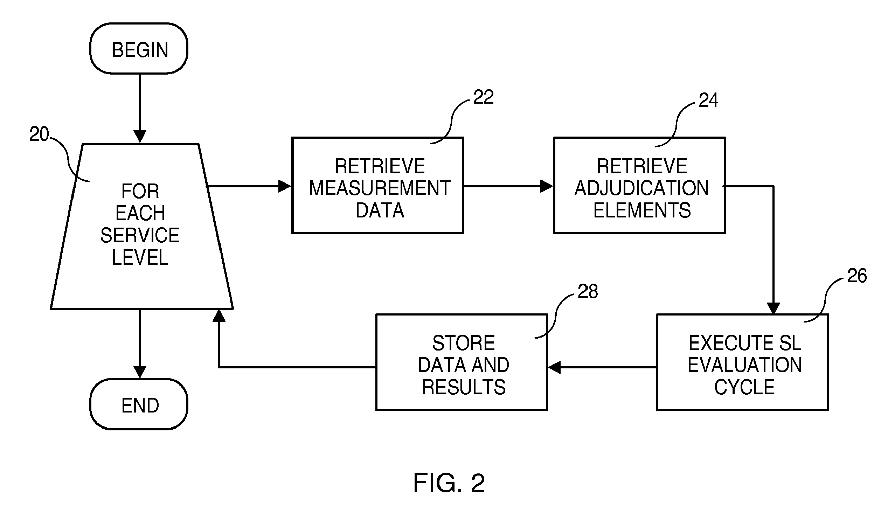

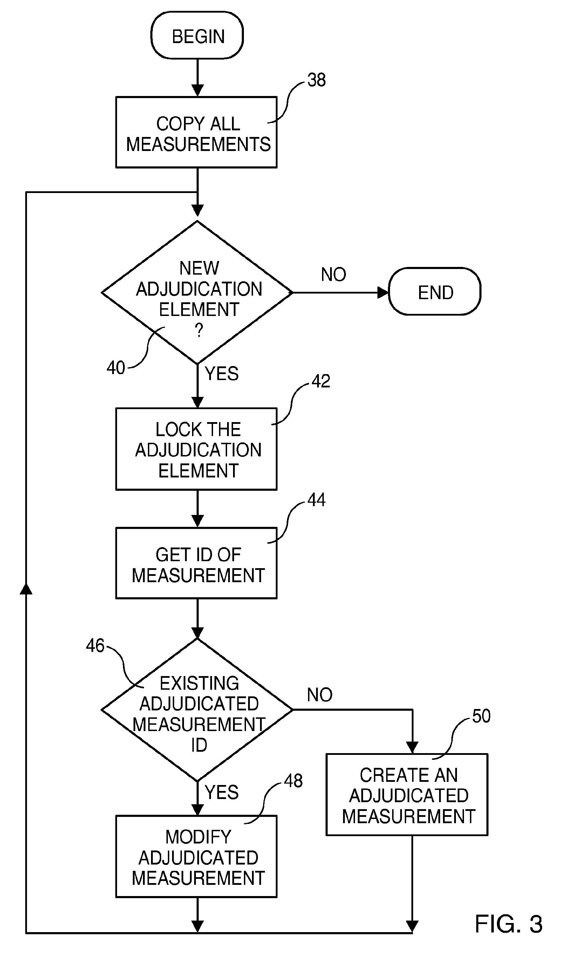

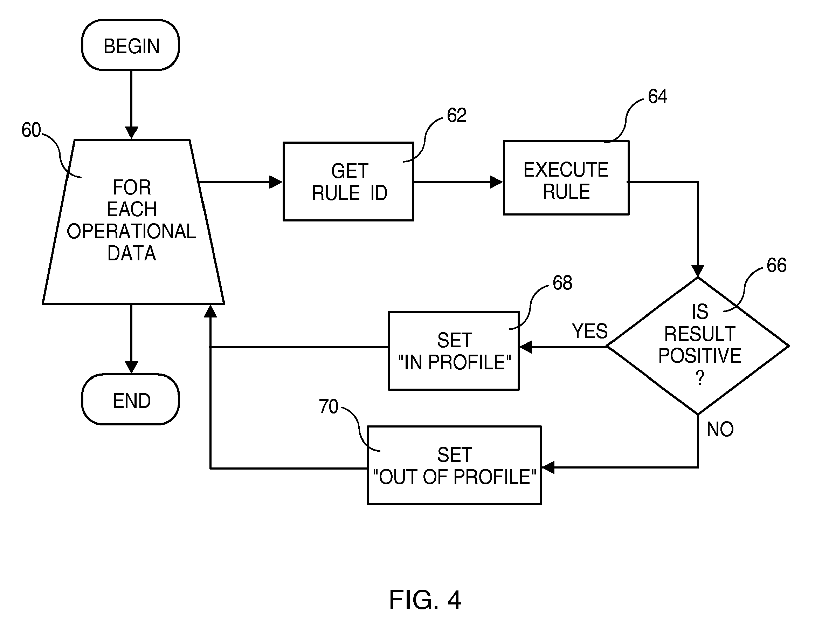

The above and other objects, features and advantages of the invention will be better understood by reading the following more particular description of the invention in conjunction with the accompanying drawings wherein:
■ Fig. 1 is a schematic block-diagram representing the process engine used in the invention and the sequence of steps implemented therein;
■ Fig. 2 is a schematic diagram illustrating the processing cycle implemented for each service level;
■ Fig. 3 is a flow chart of the steps implemented in the process of adjudicating the measurement data; and
■ Fig. 4 is a schematic diagram illustrating the process for creating a rule in the step of qualifying the operational data.

### Detailed description of the invention

A system according to the invention is composed of a repository of the description of the SLA corresponding to each Service Level, a first datastore for the measurement data, a second datastore for adjudication elements, a third datastore for SL results, operational data, adjudicated data and a processing engine for processing an evaluation cycle for each Service Level (SL).

The processing engine 10, illustrated in Fig. 1, includes the necessary software modules to process the measurement data received as input and to provide qualified operational data as output. As described hereafter, the process performed by the processing engine comprises essentially four main steps, a step of adjudicating the input measurement data 12, a step of transforming the adjudicated data into operational data 14, a step of evaluating these operational data 16 and a step of qualifying the operational data 18. In other words, as illustrated in Fig. 2, the process is implemented for each service level 20. First, the measurement data for the service level is retrieved (step 22), such measurement data being related to the evaluated SL period. Then, all the adjudication elements related to the evaluated SL period are retrieved (step 24), from the second datastore for the adjudication elements and the SL evaluation cycle can be executed (step 26) using SLA description. Finally, the adjudicated data, the qualified operational data and the SL results are stored (step 28) into the third datastore.

Referring again to Fig. 1, the step of adjudicating 12 is used to reflect the real domain of responsibility of the Service Provider, or to reflect reality because, for some reason, the monitors provide incorrect data. A new set of data must be produced by this step. Although the measurement data have been modified, reference data are still available to be used by other systems requiring the original observed data, or so that changes can be audited since the data can be used for legal purposes

Adjudication elements 30 can be clauses 32 created at contract signing time and which are valid for the whole Service Level life (exclusion cases, special conditions, limits on resources,...) or can be created, from the adjudication console 34, at any time during the Service Level life by Service Managers when executing their Service Level Management tasks, or automatically from other Enterprise Management systems 36 like Problem and Change Management, using responsibility fields and other information. They must hold a reason for the modifications they bring, which will be shown to the end customer and must be agreed by him, and information about the creator who/which is first authenticated and goes through processes of authorization.

Each "modified" data point contains a list of references to applied adjudication elements and clauses in their specific order of appliance, for auditing, detailed reporting, explanation/customer relationship, and for legal justification and later billing exploitation (rebate or reward). Each adjudication element 30 is locked as soon as it is used so that no more modification can happen to it, for guaranteeing that proper information is available for auditing controls.

This step also supports a parallel information management process whereby the adjudication can be sealed so that no more modification can be made to the Service Level result and other produced data for a given Service Level period, i.e. no more adjudication element can be created for this Service Level period. This corresponds to a process of finalization just before result data is sent to billing systems or used for other legal purposes, and after they have been reviewed and agreed with the customer.

Each time an SL is requested to be evaluated, the process illustrated in Fig. 3 is executed. First, all measurements are copied as adjudicated measurements with an empty modification history chain (step 38), thus enabling to store an history of modifications to each measurement. Then, the process checks whether there is still an adjudication element to apply (step 40) to the set of adjudicated measurements. If it is the case, the adjudication element is locked as mentioned above (step 42) and the identification of the measurement to be changed from the adjudication element is got (step 44). Then, it is checked whether it corresponds to an existing adjudicated element identification (step 46). If so, the adjudicated measurement contents are replaced by the contents specified in the adjudication elements and the adjudication element identification is added to the modification history chain (step 48). If it is not the case, a new adjudicated measurement is created with this identification and filled with the contents specified in the adjudication element and this adjudication element is added to the modification history chain (step 50). In both cases, the process is looped back to the step of checking whether there is still an adjudication element to apply (step 40).

Coming back to Fig. 1, the second step performed by the processing engine 10 is to transform 14 the adjudicated data into operational data by using a service time profile 52 describing the Service Level time logic (also commonly referred to as a service calendar and defining different periods of service with possibly different SLT's), and the specific business logic defined in the Service Level to modify raw data into a more appropriate form for evaluating and producing summary service level results. In addition, each produced operational data point refers back to the original adjudicated measurement data point(s) it comes from, for tracing and auditing purposes. For example, a Service Level time logic can contain critical periods and off-peak hours in a month where different targets are to be achieved, or periods of no service. Monitoring devices and data collection systems have no knowledge of this information which is contract specific, and measurement data points can cover multiple such periods. Appropriate sets of data points need to be produced for generation of service level results and comparison with different service level targets. And to continue the example, if measurements are coming from different probes monitoring the same resource, they need to be merged using a logic 54 specified in the Service Level before they can be used for Service Level calculations when evaluating and producing summary service level results.

In more details and as an example, the step of transforming the adjudicated data into operational data can be decomposed in two sub-steps. This example illustrates how adjudicated data are propagated to the next steps of the evaluation process.
*1. Merging of several measurement data on the same monitored resource, independently from the SL Service Time Profile (or business schedule).* This part defines precisely the format of initial and transformed data, and since they are precisely identified and defined, the description of the SL business logic to merge data can be itself a program, supplied by the people who have defined the Service Level with the customer, or by the customer himself.
   The merging step gathers measurements per measurement type id, and at the same time it creates a pre-operational data point (i.e. an operational data point with no business schedule state) for each adjudicated data point, keeping the adjudicated values as they are and a reference to the original adjudicated data point. Then, it selects for each group the corresponding business logic from the SL information, and for each group, it applies the merge logic to produce a new set of pre-operational data points per group. How the merge logic is executed on the data points is implementation dependent: this can be an interpreter, a dynamic call to a compiled form of the logic, etc.
   As an example, 3 probes are monitoring a URL, and it is defined in the SL that an outage is declared when all 3 probes agree to see an outage, and that this outage lasts from the first probe measurement detecting it to the first probe measurement returning to normal. In this case, only one measurement type is seen = observed URL state, so there will be only one group. 3 measurements feeds come in, identified by their different resource ids. To further simplify, each data point can only mention an outage time and duration for the given resource id/probe. There is no need to show also available records, since by default, what is not an outage means is available.
   These are put in one group of measurement, and then merged using the supplied logic. In this case, the formal logic supplied can be:
   - build one data set of pre-operational points sorted by measurement timestamp filed, from the group of data sets,
   - go through each non excluded point in sorted order, and see if the time interval it describes (timestamp, timestamp + duration) overlaps with the time interval of two following or simultaneous points with different resource ids.
   - if yes, create a new operational data point from these 3 points using the operational data point creation tool, and set the timestamp to the one of the current point, and the duration to the minimum of (timestamp + duration) of the 3 points minus this point timestamp, discard the 3 operational data points used to create this one, and insert this one in the sorted list instead, retaining in it the list of original adjudicated data points.
   - if not, discard the data point.
*2. Split of measurement data against service Time Profile periods (Service Level time logic) to create separate sets for each period.* This step allows applying the same process in parallel to each set of data without caring anymore about the Service Time Profile before getting to the SL result comparison stage.
   The split step takes as input the output of the previous step, that is pre-operational data points with no business schedule state set yet. The external input of this step is a calendar showing the active business state for each time in the processed Service Level.
   The logic of this step is quite simple and always the same:
   a- for each pre-operational data point, get the business state for the data point timestamp from the calendar, and set it in the now operational data point,
   b- if the point is a summary point (i.e. not a unique point in time, but covers a time range), look at the calendar to check if the business state changes before the end time of the interval covered by the summary point,
   c- if yes, create a new operational data point from this point. Set the timestamp of this new point to the time of change of the business state, set its business period state to this new state, and set its end time or duration to match with the end of the current point. Set the end time or duration of the current point to the time of change of the business state. Then, restart sub-step c- using the new operational data point.

As an example, if an outage lasts from 3pm to 11pm and the Service Time Profile states that in a day, 8am to 8pm is normal hours, and outside it is off peak hours with a different target, then the outage needs to be split in two pieces, one from 3pm to 8pm with business period state = "normal hours", and one from 8pm to 11pm with business period state = "off peak hours".

Then, the operational data are evaluated (16) through a Service Level evaluation using a formula 56, specifying which data are to be fed as input, what is the form of data (response time, availability, counts, states), and how the input data should be processed to produce summary intermediate and top Service Level results. There is one set of data produced per business period in the Service Time Profile. The data produced by this step are to be used directly for Service Level attainment comparison, for reporting on service levels, and for input to other Enterprise Management systems. It matches what is contractually committed by the provider and represents a negotiated value and quality of the delivered service.

Finally, the operational data resulting from adjudicated data are qualified (step 18) with regards to their participation in achieving or degrading results compared to Service Level targets 58 for each business period. This step qualifies produced operational data points with labels like "In profile" (=contributes to good SL result) or "Out of profile" (=contributes to degrading SL result), and with deltas to breaking limit to understand the margin by which a data point is contributing to the high level SL results, whether bad or good (for example : time remaining before "Out of profile" or violation, for problem resolution times, etc.).

This enriching of operational data is to be used by the Service Provider Managed Operations people and by their automated systems to continuously track the detailed contribution to the end to end final service level, to understand their impact on it, and to help them prioritize work and actions in order to guarantee the end to end service level. As an example of the latter, the time remaining before violation for problems resolution is an information to be used to understand which problems to solve first in the list of currently open problems. As an example of the former, showing which detailed metrics contribute to SL result degradation helps to pinpoint quickly in the input data set what are the points to improve, and to control the effect of corrective actions. This is possible because each operational data point points back to adjudicated data, which in turn has in its history the list of modifications made to the initial data points. In addition, the delta to breaking limit information gives an idea of the amount of effort to spend to improve the service level, and of where to concentrate to yield best benefits.

The implementation process requires the creation of a rule for each type of operational data which is used to qualify them. This results in a set of qualification rules specific to each Service Level. Each operational data produced by the previous steps in the Service Level evaluation cycle has a data code associated with it that is used to retrieve the qualification rule to apply for this service level and for the business period it is in.

These rules can be in executable code and they are executed on each operational data at qualification time, or they can be description of tests to be done and conditions to be met and they are interpreted at qualification time also. Each rule is dependent on the service level evaluation formula and target. There can be some commonality between multiple service levels or not, and in case of commonality, the rules can be shared.

The process for creating a rule is illustrated in Fig. 4, for each operational data, a rule identification is got 62 in a table of rules using the operational data type id, the service level id and the business period id. The rule is then executed or interpreted 64 in comparison with the operational data.

Then, it is checked 66 whether the result is positive. If it is the case, the operational data are qualified as "in profile" 68 and, if not, the operational data are "out of the profile" 70. The result is stored as delta to target, to be used as explained above.

For example, the SLA defines that 95% of URL response time measurements should be less than 2s. Operational data produced by this SL evaluation is a list of response time measurements spread over the evaluation period and the 95th percentile value of the measurement list. In this case, it is possible to use one rule only common to both types of operational data set. This rule is to compare the operational data value with 2s and to answer positively (in profile) if inferior or equal or else negatively (out of profile), and to store the delta in the operational data point.

## Claims

1. A system for managing a service level provided by a Service Provider to a customer comprising a processing engine (10) for transforming (14) measurement data composed of data point(s) into operational data using service time profiles and Services Level business logics, and evaluating (16) said operational data in order to produce Service Level results and qualified operational data ;
Said system being **characterized in that** said processing engine comprises:
means (12) for adjudicating said measurement data before transforming them into operational data, this adjudication being made by using a set of adjudication elements (30) describing the modifications to bring, and
means (18) for qualifying said operational data after they have been evaluated, this qualification being made by comparing operational data with qualification values determined with regard to Service Level targets for each business period.

2. The system according to claim 1, wherein said adjudication elements (30) used by said adjudicating means (12) are selected amongst clauses (32) created at contract signing level and being valid for the whole Service Level life, elements created from an adjudication console (34) at any time during the Service Level life by Service Level managers, or elements from other enterprise management systems (36).

3. The system, according to claim 2, wherein each of said adjudication elements (30) is locked after it has been used by said adjudicating means (12).

4. The system, according to claim 3, wherein each adjudicated measurement data point contains a list of references to the adjudication elements which have been used and clauses in their specific order of appliance for auditing, detailed reporting, explanation customer relationship and for legal justification and later billing exploitation.

5. The system according to claim 4, wherein said processing engine (10) uses, for transforming adjudicated data into operational data, a Service Level merge logic (54) to merge several measurement data on the same monitored resource so that the format of initial and transformed data can be precisely defined and a service time profile (52) to split data into separate sets of data for each period.

6. The system according to claim 5, wherein said means (18) for qualifying the operational data use Service Level targets (58) and rules for each business period in order to qualify said operational data with labels like "In profile" meaning that these data contribute to good Service Level results or "Out of profile" meaning that these data contribute to degrading Service Level results, and with details to breaking limits to understand the margin by which a measurement data point is contributing to the Service Level results whether bad or good.

7. A method for managing the Service Level provided by Service Providers to a customer comprising the steps of transforming (14) measurement data composed of data point(s) into operational data using service time profiles and Service Level business logics and evaluating (16) said operational data in order to produce Service Level results and qualified operational data ;
said method being **characterized in that** it comprises the steps of:
adjudicating (12) said measurement data before transforming them into operational data, by using adjudication elements (30) describing the modifications to bring, and
qualifying (18) said operational data after their evaluation, by comparing said operational data with qualification values for each business period.

8. The method according to claim 7, wherein said adjudication elements (30) are selected amongst clauses (32) created at contract signing level and being valid for the whole Service Level life, elements created from an adjudication console (34) at any time during the Service Level life by Service Level managers or elements from other enterprise management systems (36).

9. The method according to claim 8, wherein each measurement data point is copied before said step of adjudicating as adjudicated measurement with an empty modification history chain thereby enabling to store an history of modification to each measurement data.

10. The method according to claim 9, wherein each of said adjudication elements (30) is locked after it has been used in said adjudicating step.

11. The method according to claim 10, wherein, for each of said adjudication elements (30) being used during said adjudicating step, the contents of the measurement data point are replaced by the contents specified in the adjudication element and the identification of said adjudication element is added to said modification history chain.

12. The method according to claim 11, wherein said step of transforming the adjudicated measurement data into operational data (14) uses a Service Level merge logic (54) to merge several measurement data on the same monitored resource so that the format of initial and transformed data can be precisely defined and a service time profile (52) to split data into separate sets of data for each period.

13. The method according to claim 12, wherein said step of qualifying the operational data uses Service Level targets (58) for each business period in order to qualify said operational data with labels like "In profile" meaning that these data contribute to good Service Level results or "Out of profile" meaning that these data contribute to degrading Service Level results, and with details to breaking limits to understand the margin by which a measurement data point is contributing to the Service Level results whether bad or good.

14. The method according to claim 13, wherein, during said step of qualifying the operational data, a rule is created for each type of operational data resulting in a set of qualification rules for each Service Level, said rule being in executable code which is executed in comparison with said operational data in order to obtain a result which is "In profile" meaning that the data contribute to good Service Level results or "Out of profile" meaning that the data contribute to degrading Service Level results.
